# EUROPEAN PATENT SPECIFICATION

(11) **EP 2 033 468 B1**
(45) Date of publication and mention of the grant of the patent: **28.10.2015**
(21) Application number: 07733171.8
(22) Date of filing: 12.06.2007
(51) Int. Cl.: H04W 36/00

(54) **IMPROVEMENTS IN AN EHSPA ARCHITECTURE**
VERBESSERUNGEN AN EINER EHSPA-ARCHITEKTUR
AMÉLIORATIONS DANS UNE ARCHITECTURE EHSPA

(30) Priority: 12.06.2006 GB 0611538; 03.11.2006 GB 0621971; 05.01.2007 GB 0700221
(43) Date of publication of application: 11.03.2009
(73) Proprietor: Vodafone Group PLC, Newbury Berkshire RG14 2FN (GB)
(72) Inventor: FROST, Timothy, Faulkner, Thatcham Berkshire RG19 3SG (GB); FOX, David, Reading, RG30 2RB (GB); WONG, Gavin, Walton on Thames Surrey KT12 5BP (GB); PUDNEY, Christopher, David, Highclere Newbury, RG20 9EZ (GB)
(74) Representative: Boult Wade Tennant
(86) International application number: PCT/GB2007/002162
(87) International publication number: WO 2007/144592

(56) References cited:
- EP-A- 1 583 292
- WO-A-01/41493
- US-A1- 2003 003 919
- THIRD GENERATION PARTNERSHIP PROJECT ET AL: "TR 25.912, V0.1.7, Feasibility Study For Evolved UTRA and UTRAN, Release 7" 3RD GENERATION PARTNERSHIP PROJECT (3GPP); TECHNICAL REPORT (TR), XX, XX, [Online] no. 25912, 29 May 2006 (2006-05-29), page complete, XP002450084 Retrieved from the Internet: URL:http://www.3gpp.org/ftp/Specs/archive/ 25_series/25.912/25912-017.zip> [retrieved on 2007-09-10]
- HOLMA H; TOSKALA A: "WCDMA for UMTS: Radio Access Network Architecture" WCDMA FOR UMTS : RADIO ACCESS FOR THIRD GENERATION MOBILE COMMUNICATIONS, CHICESTER : JOHN WILEY & SONS, GB, vol. VOL. 3 OF 5. CONF. 39, 2000, pages 53-71, XP002450086 ISBN: 0-7803-6639-5
- ERICSSON: "Intra-LTE mobility in active mode" 3GPP TSG SA WG2 ARCHITECTURE - S2#52, 8-12 MAY 2006, SHANGHAI, CHINA, R3-060718, [Online] 3 May 2006 (2006-05-03), XP002450088 Retrieved from the Internet: URL:http://www.3gpp.org/ftp/tsg_ran/WG3_Iu /TSGR3_52/docs/R3-060718.zip> [retrieved on 2007-09-10]
- VODAFONE GROUP: "Architectural concept for allowing migration to SAE architecture and common core network" 3GPP TSG RAN WG3#53, TALLINN, ESTONIA, 28/8-1/9/2006, R3-061207, [Online] 23 August 2006 (2006-08-23), XP002450089 Retrieved from the Internet: URL:http://www.3gpp.org/ftp/tsg_ran/WG3_Iu /TSGR3_53/docs/R3-061207.zip> [retrieved on 2007-09-10]
- VODAFONE: "Provision of CS carrier sharing over "collapsed eHSPA architecture"" 3GPP TSG RAN WG3 MEETING #55, ST. LOUIS, USA, 12-16 FEBRUARY 2007, R3-070314, [Online] 19 February 2007 (2007-02-19), XP002450090 Retrieved from the Internet: URL:http://www.3gpp.org/ftp/tsg_ran/WG3_Iu /TSGR3_55/docs/R3-070314.zip> [retrieved on 2007-09-10]
- 3GPP: "3rd Generation Partnership Project; Technical Specification Group Radio Access Network; HSPA Evolution (FDD); (Release 7)" 3GPP TR 25.999 V2.0.0 (2007-05), [Online] XP002450091 Retrieved from the Internet: URL:http://www.3gpp.org/ftp/Specs/archive/ 25_series/25.999/25999-200.zip> [retrieved on 2007-09-10]
- ETSI / 3GPP: "Digital cellular telecommunications system (Phase 2+); Universal Mobile Telecommunications System (UMTS); Network architecture (3GPP TS 23.002 version 6.10.0 Release 6)", ETSI TS 123 002 V6.10.0 (2005-12), December 2005 (2005-12), pages 1-62,
- ETSI / 3GPP: "Digital cellular telecommunications system (Phase 2+); Universal Mobile Telecommunications System (UMTS); General Packet Radio Service (GPRS); Service description; Stage 2 (3GPP TS 23.060 version 6.12.0 Release 6)", ETSI TS 123 060 V6.12.0 (2006-03), March 2006 (2006-03), pages 77-95,

## Description

This invention relates to a system and method for use in a telecommunications network employing High Speed Packet Access (HSPA) technology. More particularly, the invention relates to an evolved HSPA (eHSPA) collapsed architecture for utilising HSPA technology and utilising it with the existing UMTS radio access network architecture.

### Background

Since its introduction, third-generation (3G) UMTS cellular technology has provided the ability to deliver more voice channels and higher-bandwidths to user equipment/terminals (UEs) such as mobile handsets. However, there is a desire for higher speed data.

In this regard High-Speed Packet Access (HSPA) was developed. HSPA is a protocol that provides a transitional platform for UMTS-based 3G networks to offer higher data transfer speeds, and so bridges the gap between 3G networks and the Internet. In other words, HSPA is able to dramatically improve the performance of a radio network, whilst maintaining the underlying architecture. HSPA is made up of High Speed Downlink Packet Access (HSDPA) and High Speed Uplink Packet Access (HSUPA).

HSPA provides impressive enhancements over WCDMA, including higher throughputs, and faster response times, particularly for web-browsing. More importantly, HSPA offers a large spectrum efficiency increase, which translates into either much higher throughputs or significantly more data users on a single frequency or carrier. The substantial increase in data rate and throughput is achieved by implementing a fast and complex channel control mechanism based upon short physical layer frames, Adaptive Modulation and Coding (AMC), fast Hybrid-ARQ (Automatic Repeat-reQuest) and fast scheduling.

The exact implementation of HSPA is known, and so will not be described further here. HSPA can be implemented as an upgrade to and in co-existence with deployed UMTS/WCDMA networks. The cost of deploying HSPA chiefly lies in base station and Radio Network Controller (RNC) software/hardware upgrades. Most base stations (also known as Node Bs) will need upgrades to cope with the increased data throughput and the consequences of moving to a more complex protocol.

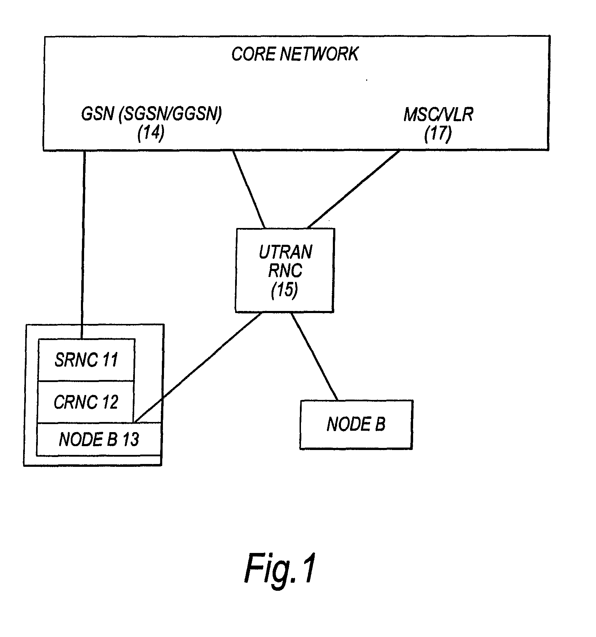

Advancements have also been made to HSPA, and the improved version has been termed evolved HSPA (eHSPA). In this regard, an evolved HSPA Node B architecture 10 has been proposed, which is shown in Figure 1. In addition to the standard Node B functionality 13, these nodes have RNC functionality, which, when in use, will provide the roles of serving RNC (SRNC) 11 and controlling RNC (CRNC) 12. The RNC functionality is provided alongside the Node B functionality within the base station/evolved Node B 10. Thus this eHSPA architecture can be described as "a collapsed RNC/Node B" architecture. With this architecture the call set up delay can be reduced, as there is minimal latency associated with the communications between the RNC functionality 11, 12 and the Node B functionality 13. This eHSPA "collapsed RNC/Node B" architecture enables user terminals to connect to the eHSPA Node B without requiring any modifications.

3GPP TR 25.912 VO.1.7 is a document describing a feasibility sturdy for the deployment of Evolved UTRA and such eNode Bs. It is to be appreciated that the evolved HSPA Node B architecture of Figure 1 has been designed so as to handle packet switched data communications more efficiently. In this regard, the SRNC 11 within the evolved HSPA Node B 10 is able to communicate directly with the Packet Switched (PS) Component of the Core Network. More specifically, the evolved HSPA Node B communicates directly with the GPRS Service Node (GSN) 14 via the Iu-PS interface. The GSN 14 is made up of the Serving GPRS Support Node (SGSN) and the

One difficulty with this approach, however, arises with the multi-RAB (Radio Access Bearer) scenario. More specifically, if a user terminal already has a PS connection with the GSN via the eHSPA Node B, and a CS connection is additionally required, then, since the SRNC of the evolved HSPA Node B cannot provide a CS connection, SRNS relocation is required, at least in the control plane, to a legacy RNC before a circuit switched connection can be fully established.

This is not a straightforward matter, however, in view of the architectural difference of the evolved HSPA Node B to standard Node Bs.

A further requirement of the Figure 1 architecture is that legacy terminals are able to obtain a full service from the evolved HSPA Node B, such that they can gain access to packet switched data networks as well as circuit switched data networks. The difficulty here is that at least for terminals wanting to make CS calls, which are not compatible with HSPA, to access the CS core network via the evolved HSPA Node B, the RNC 11 within the evolved HSPA Node B would need to support the legacy CS domain connectivity, in addition to connectivity to the PS domain.

In addition, as stated earlier, it may be preferable to connect Release 99 PS calls to the legacy RNC because this architecture is more suited for handling soft handover, which may be needed for Release 99 channels where HARQ (Hybrid Automatic-Repeat Request) retransmissions are not possible.

Therefore the UTRAN architecture allows for CS and data communications for such legacy call types and those terminals not supporting HSPA to be routed to the PS/CS component of the Core Network 14 via the UTRAN RNC 15. A difficulty with this is that the evolved Node B may not be able to determine that the terminal with which it is communicating is a legacy terminal nor is it able to determine the service required by the terminal until after a Radio Resource Control (RRC) connection has been set up with the terminal. Therefore, upon receiving an RRC Connection Request from such a terminal, the evolved Node B commences setting up the connection, and establishing its internal RNC as the SRNC. Accordingly, once the shortcomings of the user terminal are determined, it becomes necessary to transfer the requested communication to the legacy UTRAN. Again, this is not a straightforward matter in view of the architectural differences between the evolved Node B and standard Node Bs.

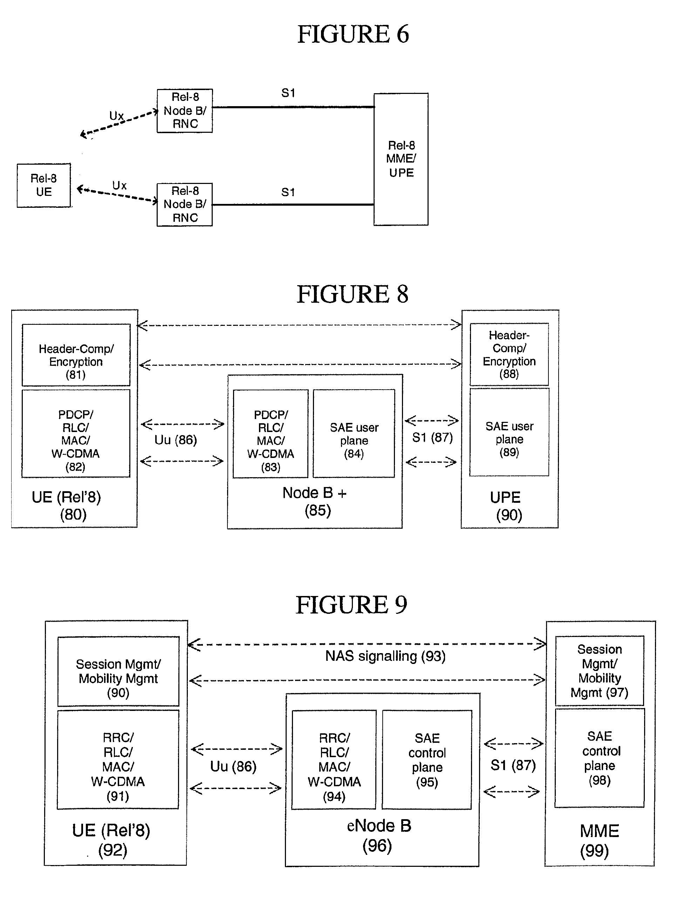

As it has also been proposed to use evolved Node Bs in the System Architecture Evolution/Long Term Evolution (SAE/LTE) network, which is a 4G technology, currently in development, similar problems apply in this new network. An example LTE architecture is shown in Figure 6.

Figure 6 shows two evolved Node Bs in communication with the MME/UPE via the S1 interface plane. The two evolved Node Bs are also able to communicate with UEs via the Ux air interface.

The Mobility Management Entity (MME) is typically allocated the functionality of managing and storing the UE control plane context, generating temporary IDs, UE authentication, authorisation of Tracking Areas (TA) and PLMNs and mobility management. The User Plane Entity (UPE) is typically allocated the functionalities of managing and storing UE user plane context, DL User Plane termination in LTE_IDLE, ciphering, mobility anchor, packet routing and forwarding and initiation of paging. The control plane between the eNode B and the MME is typically described as S1-C, while the user plane between the eNode B and the UPE is typically described as S1-U. The MME/UPE can be considered as an evolved version of the Re-6 SGSN/GGSN nodes. The MME/UPE can be considered as two separate nodes, or as one node. Also, as the exact functionality of the MME/UPE is still being finalised by 3GPP, all the functionalities above are only to be taken as guides to operation of LTE/SAE networks.

The LTE/SAE network will be exclusively packet-switched (PS) and IP based, and the circuit-switched (CS) core network will not exist in LTE. Hence voice and other services previously delivered over the CS core network in UMTS will be provided via a PS IP core and IP Multimedia Subsystem (IBS), an architecture for delivering IP multimedia services to end users.

Therefore, if we wish to allow a migration path from "eHSPA architecture connected to UMTS core network" to "eHSPA architecture connected to SAE core network" in order to continue to handle legacy "UEs NOT supporting SAE connectivity" on the same cell as "UEs that DO support SAE connectivity", then it may again be beneficial to re-use the concept of connectivity from eHSPA Node B to the legacy RNC for connecting such "non-SAE supporting UEs" to the UMTS core network, with the new architecture. In other words, where the evolved Node B in the LTE network receives an RRC Connection Request from a non-compatible terminal, it will be necessary to transfer the requested communication to the legacy UTRAN. Again, this is not a straightforward matter in view of the architectural differences between the evolved Node B and standard Node Bs, as well as between the LTE/SAE network and UTRAN. This will apply to both CS and PS connection requests from non-compatible terminals.

A further problem has arisen in the proposed LTE/SAE network, this time in view of the RNC functionalities being moved into the Node B. With the RRC function being moved to the Node B, this causes all functionality below RRC to also be moved to the Node B, and thus ciphering would be in the HSPA Node B. While this is a feasible approach, it would be advantageous for other options to be available.

### Summary of the Invention

According to a first aspect the present invention provides in a telecommunications network, including a base station node having a node controller component and a first radio network controller (RNC) component, the first radio network controller component configured to communicate with a packet switched component of a core network, but not with a circuit switched (CS) component, the telecommunications network further including a second RNC configured to communicate with the node controller and also to communicate with the packet switched component of the core network and the circuit switched component;
a method of establishing communication between a given user terminal and the core network via the second RNC, when a given user terminal has at least a control plane connection with the base station node, such that the first RNC is the serving RNC (SRNC), the method comprising:
transmitting at least one message over the control plane between the node controller and the core network via the second RNC, such that the message is tunnelled between the node controller and the second RNC.

According to a second aspect, the present invention provides a base station node configured to establish communications between a given user terminal and the core network the base station node having a node controller component and a first radio network controller (RNC) component, the first radio network controller component configured to communicate with a packet switched component of a core network, but not with a circuit switched (CS) component, the base station node being configured to establish a communication between a given user terminal and the core network via a second RNC, when a given user terminal has at least a control plane connection with the base station node, such that:
the node controller component is configured to consequently transmit at least one message over the control plane to the core network via the second RNC, such that the message is tunnelled between the node controller and the second RNC.

These aspects of the invention therefore enable the integration of evolved HSPA Node Bs into legacy UTRAN networks. They also provide improved and more efficient arrangements for user terminals to make use of the benefits of eHSPA Node Bs whilst still being able to access network services which are not compatible with such Node Bs.

### Brief Description of the Figures

Figure 1 illustrates an evolved Node B connected to a legacy UTRAN, an architecture in which the present invention can be implemented.
Figure 2 illustrates a signalling diagram of a user terminal establishing a CS connection via the eHSPA Node B, from idle, or when a PS connection already exists, according to a first embodiment of the invention;
Figure 3 illustrates an example of a signalling diagram for an SRNS Relocation;
Figure 4 illustrates a signalling diagram of a user terminal establishing a CS connection via the eHSPA Node B, from idle, or when a PS connection already exists, according to a further embodiment of the invention; and
Figure 5 illustrates a signalling diagram of a user terminal establishing a CS connection via the eHSPA Node B, from idle, or optionally when a PS connection already exists, according to a still further embodiment of the invention;
Figure 6 illustrates an example architecture for the proposed SAE/LTE network;
Figure 7 illustrates an example control plane architecture in an LTE/SAE network according to an embodiment of the invention;
Figure 8 illustrates an example user plane architecture in an LTE/SAE network according to an embodiment of the invention;
Figure 9 illustrates an LTE/SAE architecture with evolved eHSPA Node Bs illustrating SRNC handover, without soft handover, for an LTE/SAE compatible terminal and a legacy terminal according to embodiments of the invention; and
Figure 10 illustrates an LTE/SAE architecture with evolved eHSPA Node Bs illustrating SRNC handover, with soft handover, for an LTE/SAE compatible terminal and a legacy terminal according to embodiments of the invention.

### Detailed Description of Embodiments of the Invention

A first embodiment of the invention will now be described in relation to a user terminal, seeking a connection to a circuit switched component of a core network via the evolved node B 10 in a UMTS radio access network. This embodiment will be described in relation to the user terminal seeking a connection from idle, although it is also applicable to the situation of the user terminal already having a PS connection.

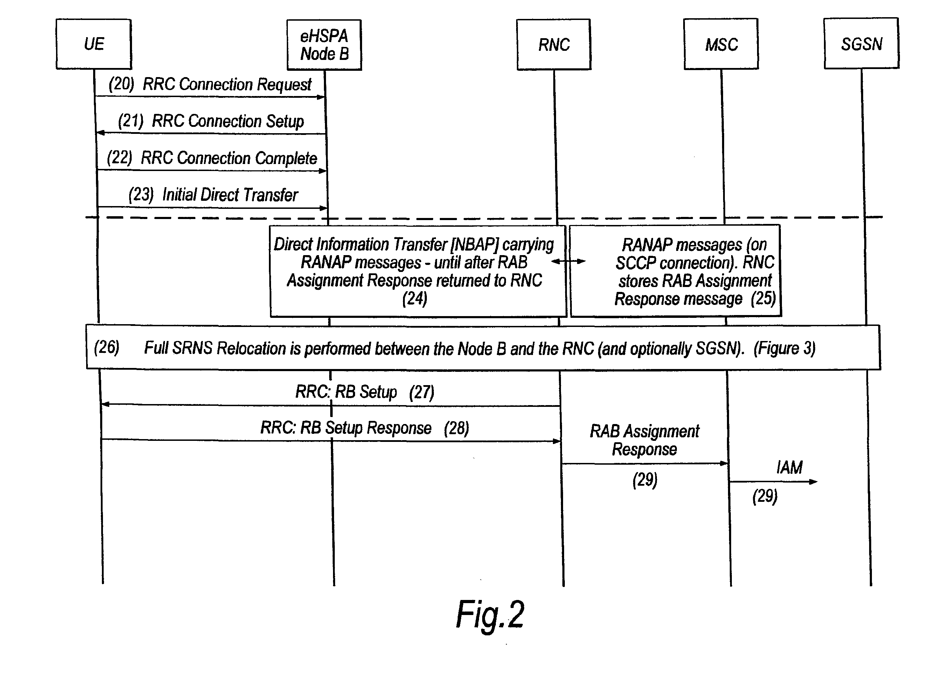

With reference to Figure 2, showing an example of an appropriate signalling diagram, the user terminal (UE) initiates communication by sending a "Radio Resource Control (RRC) Connection Request" 20 to the nearest Node B, which in this instance is the eHSPA Node B 10. Upon receiving this request, the Node B, at this point in the communication being generally unable to determine whether the user terminal requires access to the circuit switched component or the packet switched component of the core network, particularly where the terminal is a legacy terminal, proceeds with registering its internal RNC 11 as the serving RNC (SRNC).

Once the RRC connection has been set up, the Node B notifies the user terminal via an "RRC Connection Setup" message 21. The user terminal acknowledges this with an "RRC connection complete" message 22. Next the user terminal sends an "Initial Direct Transfer" message 23 to the evolved HSPA Node B 10. This message includes a service request, and so it is from this message that the evolved HSPA Node B can now determine whether the legacy terminal requires a circuit switched connection to the core network or a packet switched connection. In this instance, the terminal requires a circuit switched connection, with which the Node B's internal RNC is not compatible.

From here, once the eHSPA Node B has received the "Initial Direct Transfer" message 23, it is clear that the eHSPA Node B's internal SRNC 11 cannot be used to communicate directly with the CS Core Network. This is a consequence of the architecture of the evolved HSPA Node B, which has the internal SRNC 11 only in direct communication with the PS component 14 of the Core Network.

Therefore, according to this embodiment of the invention, the SRNC functionality 11 of eHSPA Node B 10 must communicate with the CS core network via the legacy UTRAN RNC 15 in order to establish the CS call. The eHSPA node achieves this by communicating RANAP messages 24, 25 to the MSC of the CS Core Network 12, which are tunnelled via the Iub interface using a container (from here on called "direct information transfer" container), between eHSPA Node B 10 and UTRAN RNC 15.

In Figure 2, no specific detail of the actual RANAP messages sent in the "Direct Information Transfer" container messages has been given, as their actual content and order is not important to this embodiment of the invention. It is enough merely to appreciate that the messages communicated between the evolved HSPA Node B and the MSC of the CS Core network are for the purpose of call set up and would typically include the initial UE message, as well as security mode commands.

As the initial message 24 from the evolved HSPA Node B is intended for communication to the CS component 17 of the Core Network, the message needs to be a RANAP message, since this is the protocol that the Core Network is expecting to receive. RANAP is the signalling protocol carried over the Iu interface between the Core Network and the UTRAN.

Therefore, according to the present embodiment of the invention, the Node B encapsulates this RANAP message into a "Direct Information Transfer" container, which is an NBAP container, for transmission over the Iub interface towards the UTRAN RNC 15. NBAP is a standard protocol for the Iub interface for control communications between an RNC and a Node B. The UTRAN RNC 15 is the RNC to which the SRNC functionality is to be reallocated.

At this stage in the procedure the UTRAN RNC is not directly involved in the communications between the CS component of the Core Network (i.e. the MSC), and the Node B, and so, upon receiving the NBAP "Direct Information Transfer" container, the RNC merely unpacks the RANAP message 25 and transmits it to the MSC 17 of the CS core network using an SCCP connection. SCCP is the routing protocol of the Transport layer of the Iu interface control plane, and serves to route messages to a specified destination address.

From this it is apparent that the RNC has no involvement in acting on the details of the RANAP message at this stage - it merely acts as a conduit for the message towards the Core Network. It is also to be appreciated that the core network need not be aware that it is communicating with the evolved Node B, rather than an SRNC.

Upon receiving the "Direct Information Transfer" message from the evolved Node B, the Core Network responds, such as with a "Common ID" RANAP message (not shown). In the downlink direction, the opposite of what has just been described occurs. That is, the Core Network transmits the RANAP message towards the UTRAN RNC. The RNC packs the RANAP message into an NBAP "Direct Information Transfer" container and relays the message to the evolved Node B, which reads the message and acts accordingly. In this instance, the message is intended for the user terminal, and so the Node B would forward the message to the user terminal for it to provide the requested authentication.

A further RANAP message that would subsequently be transmitted by the Core Network, once the initial RANAP message has been received, is the "RAB Assignment Request" message, to establish the Radio Access Bearer (RAB) for the communication. This RANAP message would again be transmitted to the UTRAN RNC.

In this embodiment of the invention, upon receiving the "RAB Assignment Request" message, the UTRAN RNC stores a copy of the request, encapsulates the message in a NBAP "Direct Information Transfer" container and forwards it on to the Node B over the Iub interface. Upon receiving the "RAB Assignment Request", the Node B sets up the Radio Link configuration, and then responds with a "RAB Assignment Response" RANAP message, which is again encapsulated in a "Direct Information Transfer" container and transmitted towards the UTRAN RNC over the Iub interface. The Node B then commences performing the SRNS Relocation 26 towards the UTRAN RNC. In this embodiment of the invention, when the UTRAN RNC receives the "RAB Assignment Response" message, it buffers the message and waits for the SRNS Relocation to be triggered by the Node B and for the SRNS context to be subsequently received.

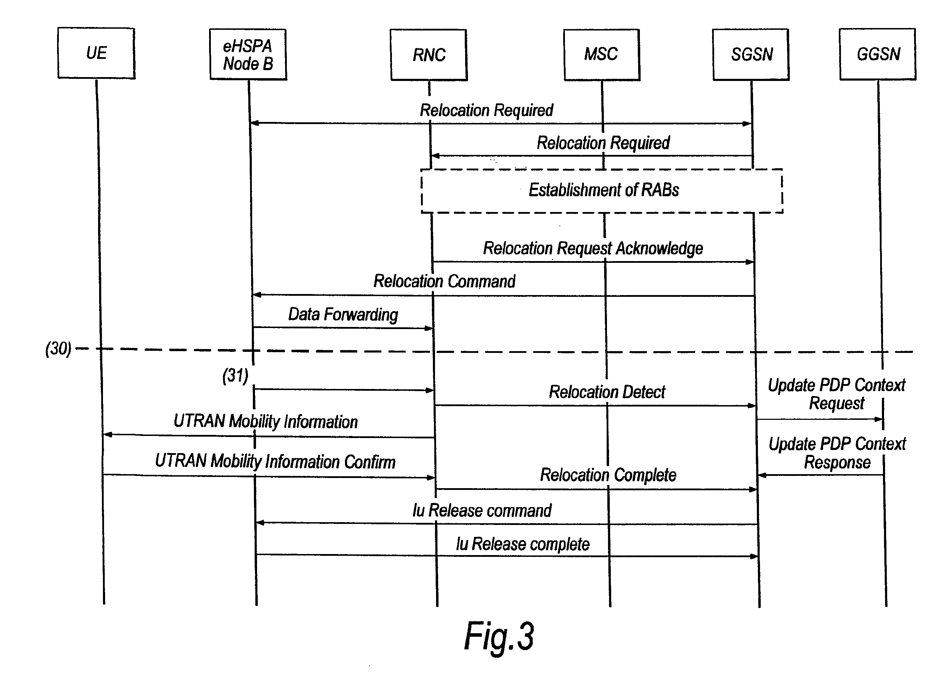

An example of an applicable SRNS Relocation procedure, where no connection to the core network current exists, is shown in Figure 3, commencing below the dotted line 30. (The procedure above the dotted line 30 relates to the procedure for moving an Iu-PS connection from an enhanced Node B's SRNC to a legacy RNC, where an Iu-PS connection already exists.)

The procedure below the dotted line in Figure 3 is mainly performed by the UTRAN RNC, and its functionality is as detailed in UTRAN 3GPP Release 7 specifications, from the stage when the UTRAN RNC receives the message "Relocation Commit" triggering SRNS Relocation if there is no existing core network connection. According to the present embodiment of the invention, instead of this message being forwarded between legacy RNCs over the Iur interface using the RNSAP protocol, an equivalent message 31 is forwarded by the evolved Node B to the UTRAN RNC over the Iub interface using the NBAP protocol. In addition, the full SRNS context may be transmitted across the Iub interface within this message. Particularly this is needed if there is no existing core network connection. If there is an existing PS core network connection, then the message may be used to inform the UTRAN RNC that it may consider itself the new Serving RNC once the SRNS context has been transferred over the Iu-PS interfaces.

Once SRNS Relocation has been triggered by the eHSPA node, subsequent steps below the dotted line 30 in Figure 3 are standard steps currently used in the UTRAN SRNS Relocation procedure and will not be described further here.

After the SRNS Relocation is successfully completed, the UTRAN RNC becomes the SRNC and from that point stops relaying RANAP messages to the eHSPA node B, and starts to function as the SRNC for the user. The eHSPA Node B also again starts to function as a normal Node B.

It is to be appreciated, however, that in this embodiment, the user plane resources have not yet been fully allocated to the new SRNC, since the eHSPA Node B did not have the Iub user plane resources established towards it before performing the SRNC Relocation.

Therefore, again referring to Figure 2, once SRNS Relocation 26 has been effected, and the UTRAN RNC has become the SRNC, it establishes the Iub user plane towards the Node B, then sends the user terminal the "RRC: RB setup" message 27. The user terminal replies to with a "RRC: RB setup response" message 28.

Once SRNS Relocation has been completed, the new SRNC also commences communicating with the MSC of the circuit switched component of the Core Network, by forwarding the "RAB assignment response" message 29, that it had previously received from the Node B and buffered. In this regard, in this embodiment of the invention, the RAB assignment response is only forwarded to the MSC once the allocation of radio resources had been completed.

Once the MSC receives the RAB assignment response, the MSC begins to establish the link to the called party, by transmitting the Initial Address Message (IAM) 29. The IAM is the first message sent to inform the partner switch that a connection is to be established. The IAM contains the called and calling number and an indication of the type of service (i.e. speech or data).

It is to be appreciated that this arrangement is likely to take slightly longer than a normal RAB establishment - due to the SRNS Relocation being involved. Therefore, it may be necessary to configure the MSC to wait a longer period of time to receive the RAB Assignment Response message 28.

Nevertheless, overall, on a per message basis, this embodiment of the invention will generally allow CS call setup messages to be passed quickly through the UTRAN, particularly since the CS messages also get the benefit of Radio Resource Control (RRC) and Radio Link Control (RLC) occurring within the Evolved Node B.

In a further embodiment of the invention, the procedure is as per the embodiment just described, however a variation relates to the UTRAN RNC's treatment of the "RAB Assignment Request" message received from the CS Core Network. In the Figure 2 embodiment, the UTRAN RNC stores a copy of the RAB Assignment Request message before forwarding it onto the evolved Node B. In this further embodiment of the invention, however, rather than storing this message and forwarding it on, the UTRAN RNC instead rejects the message with cause "Relocation triggered", which is transmitted back to the Core Network. The UTRAN RNC also notifies the eHSPA Node B of this via the Iub interface. SRNS Relocation then occurs, as described in relation to the embodiment above, but with the RAB Assignment yet to occur. It is then the responsibility of the Core Network to attempt the RAB Assignment again once the SRNS Relocation has been successfully completed.

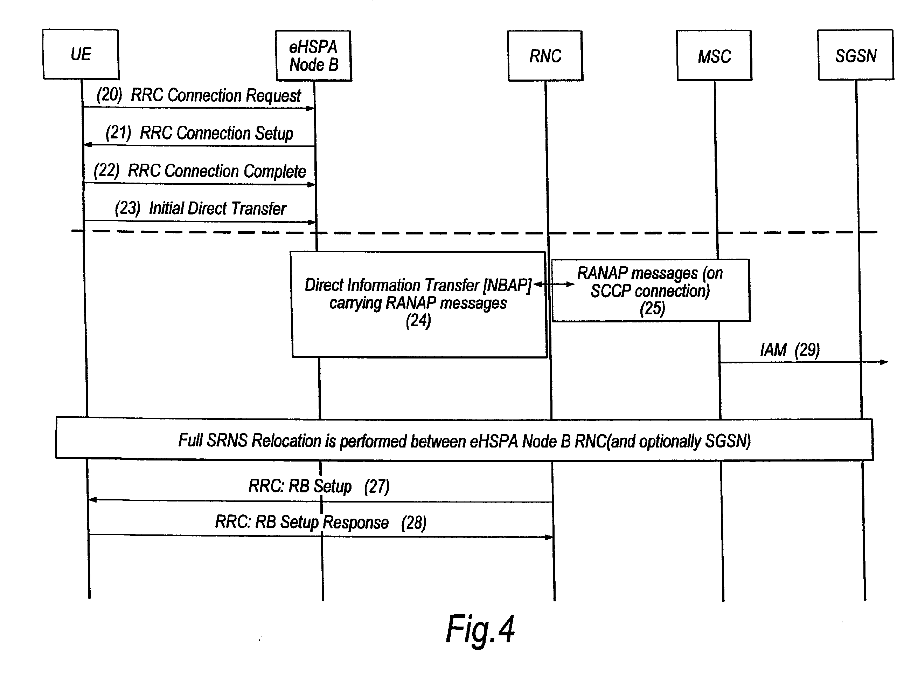

A still further embodiment of the invention is shown in relation to Figure 4, where the CS call Iub radio link is established before SRNS Relocation occurs. As with the Figure 2 embodiment of the invention, the user terminal (UE) initiates communication from idle, by sending a "Radio Resource Request (RRC) Connection Request" 20 to the nearest Node B, which in this instance is the eHSPA Node B 10. Upon receiving this request, the Node B proceeds with registering its internal RNC 11 as the serving RNC, since at this point in the communication it is unable to determine whether the user terminal requires access to the circuit switched component or the packet switched component of the core network.

Once the RRC connection has been set up, it notifies the user terminal via an "RRC Connection Setup" message 21. The user terminal acknowledges this with an "RRC connection complete" message 22. Next the user terminal, either connecting from idle or already having a PS connection established, sends an "Initial Direct Transfer" message 23 to the Node B 10. It is from this message that the Node B can now determine the type of communication required by the user terminal: that is whether the terminal requires a circuit switched connection to the core network or a packet switched connection. In this embodiment, the terminal requires a circuit switched connection, to which the Node B's inbuilt RNC is not compatible. Therefore, an SRNS Relocation needs to occur to a more appropriate RNC so that the required CS connection can be established.

Communications to effect a CS connection normally occur between the SRNC and the CS component 17 of the Core Network over the Iu interface using RANAP. This is not possible in the present instance, since the SRNC 11 is only in direct communication with the PS component 14 of the Core Network.

Therefore, according to this embodiment of the invention, the Node B functionality 13 of evolved Node B 10 takes the responsibility for communicating the Direct Information Transfer messages 24, 25 required to set up the CS core network connection.

In Figure 4, no specific detail of the Direct Information Transfer messages 24, 25 has been given, as their actual content is not important to this embodiment of the invention. It is enough to merely appreciate that the messages communicated between the evolved Node B and the MSC of the CS Core network at this stage of the call set up would typically include the initial RANAP call setup message as well as security mode commands.

The first of the RANAP messages to be transferred is typically the "Initial UE" message from the evolved Node B to the CS component 17 of the Core Network.

Therefore, according the present embodiment of the invention, the Node B encapsulates this RANAP message into an NBAP "Direct Information Transfer" container for transmission over the Iub interface towards the UTRAN RNC 15. The UTRAN RNC is the RNC to which the SRNC functionality is to be reallocated.

As was the case for the Figure 2 implementation, at this stage in the procedure the UTRAN RNC is not directly involved in the communications between the CS component of the Core Network (i.e. the MSC), and the Node B, and so, upon receiving the "Direct Information Transfer" container, the RNC merely unpacks the RANAP message, and transmits it to the MSC 17 of the CS core network using an SCCP connection. In other words, the RNC has no involvement in the processing of the RANAP message at this stage - it merely acts as a conduit for the message towards the Core Network.

Upon handling the initial RANAP call set up message transfer, the Core Network will eventually send the "RAB Assignment Request" message, to establish the Radio Access Bearer (RAB) for the communication. This RANAP message would again be transmitted to the UTRAN RNC across the Iu-CS interface. In this embodiment of the invention, upon receiving this message, the UTRAN RNC encapsulates the message in a NBAP "Direct Information Transfer" container before relaying it on to the Node B over the Iub interface. Upon receiving the "RAB Assignment Request", the Node B performs admission control and sets up the Radio Link configuration in the eHSPA Node B, and then responds with a "RAB Assignment Response" RANAP message, which is transmitted towards the UTRAN RNC over the Iub interface, again in an NBAP "Direct Information Transfer" container. When the UTRAN RNC receives the "RAB assignment Response" RANAP message, it unpacks the message and relays it to the MSC of the CS Core Network. The MSC responds by sending an "Initial Address Message" (IAM) 29, to inform the partner switch that a connection is to be established between the user terminal and the called party.

At this stage, the Node B's RNC is still the SRNC, and so SRNS Relocation still needs to occur before the CS connection between the user terminal and the called party can be fully established. Therefore, after sending the RAB Assignment Response message towards the UTRAN RNC, the eHSPA Node B triggers the SRNS Relocation by forwarding the "Relocation Commit" message to the UTRAN RNC in NBAP across the Iub interface. Alternatively, in the situation of a PS connection already existing, it may perform the SRNS Relocation via the SGSN, and then send the Relocation Commit message to inform the UTRAN RNC that it shall consider itself the new Serving RNC.

As per the Figure 2 embodiment, an example of an applicable SRNS Relocation procedure, where no connection to the core network current exists, is shown in Figure 3, commencing below the dotted line 30. (The procedure above the dotted line 30 relates to the procedure for moving an Iu-PS connection from an enhanced Node B's SRNC to a legacy RNC, where an Iu-PS connection already exists.)

The procedure below the dotted line in Figure 3 is mainly performed by the UTRAN RNC, and its functionality is as detailed in UTRAN 3GPP Release 7 specifications, from the stage when the UTRAN RNC receives the message "Relocation Commit" triggering SRNS Relocation if there is no existing core network connection. According to the present embodiment of the invention, instead of this message being forwarded between legacy RNCs over the Iur interface using the RNSAP protocol, an equivalent message 31 is forwarded by the evolved Node B to the UTRAN RNC over the Iub interface using the NBAP protocol. In addition, the full SRNS context including the radio bearer or signalling radio bearer (on which to transmit the RRC signalling) information intended to be used by the UTRAN RNC may be transmitted across the Iub interface within this message. Particularly this is needed if there is no existing core network connection, If there is an existing PS core network connection, then the message may be used to inform the UTRAN RNC that it may consider itself the new Serving RNC once the SRNS context has been transferred over the Iu-PS interfaces. Although not shown in figure 3, in both cases there may also be a preparation phase on which to prepare the UTRAN RNC for the pending SRNS Relocation, which may involve interaction where the node controller is required to inform the terminal of the configuration to be used following the SRNS Relocation. There may also be some additional signalling between UTRAN RNC and node controller to allow the UTRAN RNC to inform the node controller whether the requested actions related to the SRNS Relocation can be carried out. In addition, such interaction may involve the UTRAN RNC tunnelling an RRC message to the node controller to allow it to inform the user terminal of the radio bearer configuration that shall be used following the SRNS Relocation.

Once SRNS Relocation has been triggered by the eHSPA node in this way, subsequent steps below the dotted line 30 in Figure 3 are standard steps currently used in the UTRAN SRNS Relocation procedure and will not be described further here.

After the SRNS Relocation is successfully completed, the UTRAN RNC becomes the SRNC and from that point stops relaying RANAP messages to the eHSPA node B, and starts to function as the SRNC for the user. The eHSPA Node B also again starts to function as a normal Node B.

It is to be appreciated, however, that in this embodiment, the user plane resources have not yet been fully allocated to the new SRNC, since the eHSPA Node B did not have the Iub user plane resources established towards it before performing the SRNC Relocation.

Therefore, again referring to Figure 4, once SRNS Relocation 26 has been effected, and the UTRAN RNC has become the SRNC, it establishes the Iub user plane towards the Node B, then sends the user terminal the "RRC: RB setup" message 27. The user terminal replies to with a "RRC: RB setup response" message 28.

In figure 3 it does not show the Iub resources being setup to be able to transmit the RRC messages following the SRNS Relocation. However this would be needed to be done prior to the UTRAN RNC sending the UTRAN Mobility Information to the UE.

A benefit of this solution is that there is less additional delay to the call set up, because configuration of the radio link and admission control are performed before SRNS Relocation, allowing the called party's connection to be established concurrently with the SRNS Relocation. In other words, the set up delay is reduced, due to an overlap in the set up procedures, rather than waiting for the SRNS relation to occur before finalising the communication link to the called party, as occurs in the Figure 2 embodiment of the invention.

A further embodiment of the invention relates to a variation of the embodiment just described. In this further embodiment, the CS call radio link is again established before SRNS Relocation occurs, and the user terminal (UE) initiates communication from idle. Therefore, the communications 20, 21, 22, 23 between the UE and the evolved Node B occur as per Figure 4 and the previously described embodiment, and the Node B proceeds with registering its internal RNC 11 as the serving RNC.

Once the Node B receives the "Initial Direct Transfer" message 23 from the user terminal (either connecting from idle or already having a PS connection), the Node B is then able to determine whether the terminal requires a circuit switched connection to the core network or a packet switched connection. In this embodiment, the terminal requires a circuit switched connection, with which the Node B's inbuilt RNC is not compatible. Therefore, an SRNS Relocation needs to occur to a more appropriate RNC so that the required CS connection can be established.

Hence, the Node B functionality 13 of evolved Node B 10 takes the responsibility for communicating the initial RANAP messages 24 to the CS component 17 of the Core Network.

As per the previous embodiment of the invention, the Node B encapsulates this RANAP message into an NBAP "Direct Information Transfer" container for transmission over the Iub interface towards the UTRAN RNC 15. The UTRAN RNC is the RNC to which the SRNC functionality is to be reallocated.

At this stage in the procedure the UTRAN RNC is not directly involved in the communications between the CS component of the Core Network (i.e. the MSC), and the Node B, and so, upon receiving the "Direct Information Transfer" container, the RNC merely unpacks the RANAP message, and transmits it to the MSC 17 of the CS core network using an SCCP connection. Upon receiving the initial RANAP message, the Core Network responds.

The UTRAN RNC will relay all RANAP messages between the Core Network and the evolved Node B in this way, until the Core Network sends the "RAB Assignment Request" message, to establish the Radio Access Bearer (RAB) for the communication. In this embodiment of the invention, upon receiving the RAB Assignment request message, the UTRAN RNC acts as the RNC and sets about establishing the radio link configuration towards the Node B using NBAP.

At this stage, the Node B's RNC is still the SRNC, and so SRNS Relocation still needs to occur before the CS connection between the user terminal and the called party can be fully established. Therefore, after sending the Radio Link Setup/Reconfiguration Response message towards the UTRAN RNC, the eHSPA Node B triggers the SRNS Relocation by forwarding the "Relocation Commit" message to the UTRAN RNC in NBAP across the Iub interface.

The evolved Node B triggers relocation in this way in view of the behaviour of the UTRAN RNC in establishing the user plane resources towards the Node B. That is the Node B recognises that the UTRAN RNC is performing some of the functions of the SRNC, and so then performs an SRNS relocation so that the UTRAN RNC is able to perform fully as the SRNC.

Once SRNS Relocation has been triggered by the eHSPA node, subsequent steps proceed as per those illustrated below the dotted line 30 in Figure 3, which are standard steps currently used in the UTRAN SRNS Relocation.

Once the admission control has been successfully completed and the SRNS Relocation has been completed towards the UTRAN RNC, the evolved Node B notifies the UTRAN of such, and the UTRAN RNC then transmits the "RAB Assignment Response" RANAP message to the Core network. The MSC responds by sending an "Initial Address Message" (IAM) 29, to inform the partner switch that a connection is to be established between the user terminal and the called party.

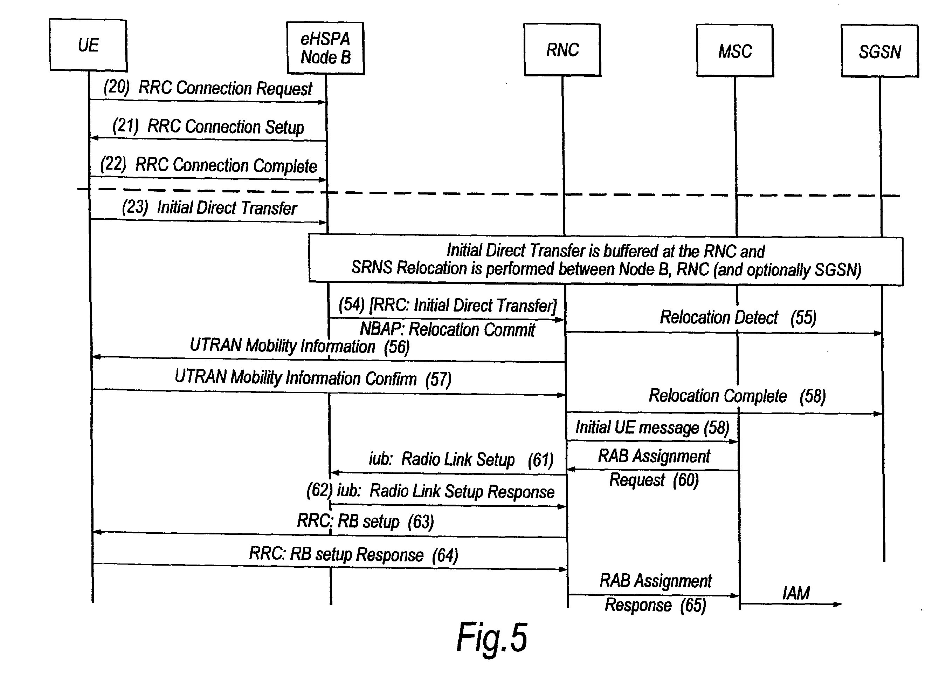

A still further embodiment of the invention will now be described in relation to Figure 5. In this embodiment, the user terminal (UE) requests a CS connection from idle. The user terminal first sends a "Radio Resource Request (RRC) Connection Request" 20 to the eHSPA Node B 10. The Node B notifies the user terminal that the connection is set up via an "RRC Connection Setup" message 21. The user terminal acknowledges this with an "RRC connection complete" message 22. Next the user terminal sends an "Initial Direct Transfer" message 23 to the Node B 10. It is from this message that the Node B determines the type of connection required by the terminal (either connecting from idle or already having a PS connection). In this embodiment, in addition to its existing PS connection, the terminal requires a circuit switched connection, with which the Node B's internal RNC is not compatible. Therefore, an SRNS Relocation needs to occur to a more appropriate RNC before the user terminal can communicate via its requested CS connection.

According to this embodiment of the invention, the Node B functionality 13 of evolved Node B 10 takes the responsibility for triggering access to the CS domain, as well as triggering SRNS relocation from its internal RNC to the UTRAN RNC. In this regard, the evolved Node B tunnels the Initial Direct Transfer message (triggering access to the CS domain) within an NBAP message (which in the figure is the "Relocation Commit" message 54 - (used during SRNS relocation and potentially carrying the SRNS context)) through to the UTRAN RNC. In this regard, the Initial Direct Transfer message is encapsulated in the Iub control signalling (NBAP) and tunnelled through to the UTRAN RNC.

Once received, the RNC buffers the "Initial Direct Transfer" message until the SRNS relocation has been effected. Further, in response to the SRNS Relocation Commit message, the UTRAN RNC (with an existing PS connection effects the SRNS Relocation by first sending a "Relocation Detect" message 55 to the SGSN of the PS component of the core network, and) then sends a "UTRAN Mobility Information" request message 56 to the UE. The UE replies with a "UTRAN Mobility Information Confirmation" message 57, (and the UTRAN RNC with an existing PS connection in turn notifies the SGSN of such with a "Relocation Complete" message 58).

With SRNS Relocation completed, the UTRAN RNC, now the SRNC, forwards the "Initial Direct Transfer" message 59, previously buffered, to the MSC to set up the CS connection. The MSC replies with a "RAB Assignment Request" 60. The RNC then forwards a "Radio Link Setup" message 61 to the eHSPA Node B over the Iub interface. Since SRNS Relocation has occurred, the eHSPA Node B acts as a normal Node B and sets up the Radio Link before transmitting a "Radio Link Setup Response" 62 to the RNC once the link has been set up. The RNC then notifies the UE that the Radio Bearer has been set up, via the "RRC: RB Setup" message 63. The UE responds with a "RRC: RB Setup Response" message 64. The RNC then confirms the RAB Assignment with the MSC 65, so that the call connection with Party B can be effected.

This embodiment of the invention therefore uses the UTRAN RNC to effect SRNS Relocation before the CS Core Network is notified of the CS Connection Request.

The embodiments of the invention so far described, relate different procedures for setting up a CS call for a user terminal from idle or when already PS connected, be it a legacy terminal or otherwise. The inventive concept can similarly be applied to the situation of a legacy terminal that is not HSPA compatible, such as a Release 99 (or earlier) compatible terminal, requesting a PS call set up. In this regard, since the legacy terminal is not HSPA compatible, the PS connection cannot be established via the eHSPA's internal RNC, but must be via a UTRAN RNC.

The embodiments of the invention so far described may also be applied to the situation of a user terminal requesting a CS connection, where a PS connection has already been established with the eHSPA Node B's inbuilt SRNC.

In this regard, where the user terminal has an existing PS connection to the core network, via the evolved Node B's internal SRNC 11, and the user terminal requests a CS connection. Since the SRNC of the evolved Node B cannot provide such a CS connection, and it is desirable to have the same SRNC to provide both the PS and the CS connection, it is necessary in this situation for the evolved Node B to initiate an SRNS transfer to a UTRAN RNC.

This SRNS Relocation procedure is shown in Figure 3. Above the dotted line the necessary steps to move the Iu connection from the Node B's internal SRNC to the UTRAN SRNC are detailed. The eHSPA node first transmits a "Relocation Required" message 31 to the SGSN of the PS core network. This message can be transmitted to the SGSN via the Node B's SRNC since a PS connection with the SGSN has already been established. Alternatively, the message could be routed via the UTRAN SRNC.

When the SGSN receives the "Relocation Required" message, the SGSN notifies the UTRAN RNC of the Iu-PS Relocation requirement by sending it a "Relocation Request" message. Based upon this message, the UTRAN RNC sets about establishing its appropriate RABs. Once complete, it notifies the SGSN via the "Relocation Request Acknowledgement". The SGSN then sends a "Relocation Command" to the SRNC of the eHSPA Node to effect the Iu-PS transfer from its own SRNC to the UTRAN SRNC.

Once the eHSPA Node B has arranged the relocation of the Iu-PS connection with the core network to the UTRAN RNC, the SRNS Relocation needs to be effected from the Node B's internal SRNC to the UTRAN RNC. According to this further embodiment of the invention, the evolved Node B initiates this transfer by forwarding a "Relocation Commit" message 36 to the UTRAN RNC over the Iur interface using NBAP.

Once SRNS Relocation has been triggered by the eHSPA node, the steps outlined below the dotted line in Figure 3 are performed. This stage of the procedure may also be used for a UE that does not have an existing PS connection. This procedure is mainly performed by the UTRAN RNC, and its functionality is as detailed in UTRAN 3GPP Release 7 specifications, once it receives the message "Relocation Commit" triggering SRNS Relocation, or informing the RNC that it may consider itself the new Serving RNC for the connection. According to the present embodiment of the invention, instead of this message being forwarded between RNCs over the Iur interface using the RNSAP protocol, an equivalent message is forwarded by the evolved Node B to the UTRAN RNC over the Iub interface using the NBAP protocol. This message may also contain the full SRNS context.

Once SRNS Relocation has been triggered by the eHSPA node, subsequent steps below the dotted line in Figure 3 are standard steps currently used in the UTRAN SRNS Relocation procedure and will not be described further here.

Once the SRNC functionality has been transferred to the UTRAN RNC in this way, the eHSPA Node B begins to function as a standard Node B.

Although the embodiments above have been described in relation to a UMTS Radio Access Network, the same principles may be applied to an LTE network, transferring non-compatible UEs to a UTRAN.

A further embodiment of the invention will now be described in relation to implementing a transitional arrangement for an LTE/SAE network combined with a UTRAN, in order to cater for legacy terminals.

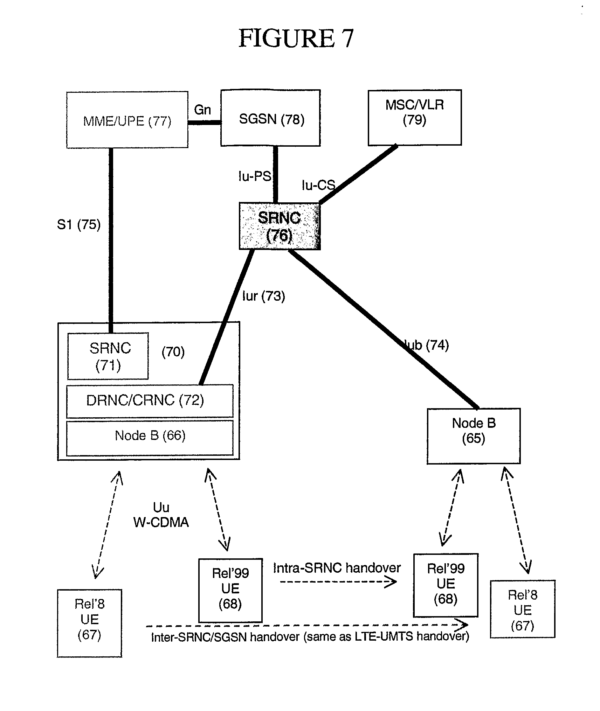

In Figure 7, an evolved HSPA Node B is in communication with the MME/UPE from the LTE/SAE network via an S1 interface, or equivalent. The evolved Node B is in communication with a legacy RNC via its inbuilt RNC, using an Iur interface. The legacy RNC is in communication with legacy Node Bs via an Iub interface. The legacy RNC is also in communication with the legacy SGSN and MSC/VLR over an Iu interface.

The connectivity between the eHSPA Node B and the legacy RNC over the Iur interface has some advantages over connectivity via Iub to the legacy RNC in that it allows the cell management to be performed in a single place. In this regard, RRC termination for newly established legacy calls will naturally be terminated in the legacy Node B, even with the Release 99 UTRAN architecture, using existing mechanisms for transferring RRC messages from a DRNC to an SRNC., The Iur interface has also developed into a more commercially interoperable interface in a multi-vendor network than the Iub interface.

Since with this SAE connectivity architecture, the evolved HSPA Node B may not be compatible with legacy UEs, when such a UE transmits a RRC Connection Request to the evolved Node B, then it is necessary for the evolved Node B to transfer the UE to a UTRAN Node B in order for the UEs communication request to be fulfilled.

To implement this transfer, the eNode B initiates an SRNC handover by transmitting a "Relocation Commit" message, or equivalent triggering message, to trigger the SRNS Relocation. In the some of the previous embodiments, this was performed by tunnelling the "Relocation Commit" message over the Iub interface from the Node B functionality of the eNode B to a UTRAN RNC, however this was just an example and any interface between eHSPA Node B and legacy RNC could actually be used. Hence in the present embodiment, an Iur interface is used between the RNC functionality of the eNode B's RNC and the UTRAN RNC.

Once the UTRAN RNC receives the triggering message, the remaining functionality of the SRNS Relocation is as detailed in UTRAN 3GPP Release 7 specifications, although small modifications are needed to allow signalling bearers to be maintained such that the legacy RNC can communicate to the UE with RRC messages.

This embodiment of the invention applies to all UEs that seek to connect to the network via the eHSPA Node B that do not have S1 interface connectivity. Without this connectivity, the UE is unable to communicate through the eHSPA Node B to the SAE core network, and hence needs to be handed over to UTRAN network components in order to make a PS and/or CS connection. In other words, as the eHSPA Node B in this architecture will typically only support IP based interfaces, the legacy SRNC can provide the interworking between packet switched technologies (e.g. ATM) and the IP based interfaces. It is also to be appreciated that this embodiment of the invention may also be applied to communications between eHSPA Node Bs in a UMTS Radio Access Network, and UTRAN RNCs.

A further embodiment of the invention addresses issues that have arisen in the proposed LTE/SAE network, in view of the RNC functionalities being moved into the Node B. To reiterate, with the RRC function being moved to the Node B, this causes all functionality below RRC to also be moved to the Node B, and thus ciphering would be in Node B.

Therefore, to provide an alternative to this arrangement, according to the present embodiment of the invention, it is proposed to switch off the existing ciphering functions in the RNC in the Node B, and use the protocol layers of the SAE architecture to provide the ciphering function in a higher level node. Packet Data Convergence Protocol (PDCP) header compression would also be moved up to a higher node, namely the UPE. Therefore, in effect, according to this embodiment of the invention, the SRNC functionalities are divided between the eNode B and the MME/UPE, such that the SRNC control plane functionality is retained in the eNode B, whilst the SRNC user plane functionalities are undertaken by the MME/UPE.

This division is represented in Figure 8 in respect of the user plane architecture. An SAE compatible UE 80 (currently often described as a 3GPP Release 8 terminal, but further releases are likely, so these embodiments are not limited to such a terminal), is in communication with the eNode B 85 over the Uu interface. The eNode B 85 has its header compression functionality 83 switched off, so it does not perform PDCP. Its Radio Link Control (RLC) encryption is also switched off 83. The eNode B therefore only communicates directly with the UE in relation to user plane issues using Medium Access Control (MAC) protocol, unencrypted RLC protocol and WCDMA. In this architecture we are still using W-CDMA, but we are not using soft combining, so we are re-using the type of Radio Access Network (RAN) architecture that has been agreed for 3GPP SAE/LTE, thus allowing migration from the UMTS core network to the 3GPP Evolved Packet-switched Core Network).

The encryption and header compression functionalities 81, in the Figure 8 example, are instead provided to the UE by communicating directly with the UPE 90. In this regard, the UPE has the resources to provide the required encryption and header compression functionalities 88.

The eNode B 85 is also able to communicate directly with the UPE 90 over an SAE user plane 84, 89. The interface for this plane is the S1 interface 87, or an S1-like interface.

Next referring to Figure 9, the division is represented in relation to the control plane architecture. In this Figure, the eNode B 96 is in communicable relation with the MME 99 over an SAE user plane 95, 98. The interface for this plane is the S1 interface 87, or an S1-like interface.

The SAE compatible UE 92, is in communication with the eNode B 96 over the Uu interface. The eNode B 96 maintains full control over control plane issues communications with the UE for Radio Resource Control, and control plane communications in Radio Link Control protocol, MAC protocol and WCDMA.

In the control plane, functionality in relation to which the MME 99 communicates directly with the UE 92, is that of Session Management and Mobility Management 90, 97. In this regard, the MME will be in communication with all eHSPA Node Bs in a given geographical area, and therefore manage the transfer of the UE between eHSPA Node Bs, as the UE moves. These communications typically utilise Non-Access Stratum (NAS) signalling.

In an alternative embodiment to that just described, instead of turning the ciphering off in the eHSPA Node B, the ciphering functions are performed twice: once in the UPE and once at the RLC layer in the eNode B's SRNC. This alternative avoids adding control complexity, and also eases compatibility considerations with UEs and legacy Node Bs that the eNode B may be in communication with.

In another alternative, combined with either or both the above two embodiments, the Header Compression is not turned off in the eNode B, so that again Header Compression can be performed twice.

Referring to Figure 7, an example LTE/SAE architecture is illustrated, with an eHSPA Node B 70. In this Figure the user planes are illustrated where the network does not support soft handover for the HSPA radio access technology. In this regard, the type of RAN architecture that has been agreed for 3GPP SAE/LTE, thus allowing migration from the UMTS core network to the 3GPP Evolved Packet-switched Core Network.

As an LTE compatible terminal 67 moves from eNode B 70 towards the legacy Node B 65, the MME handles the transfer, in conjunction with the eNode B 70. That is the MME 77 notifies the SGSN 78 of the legacy UTRAN of the movement of UE 67 toward Node B 65. SGSN will therefore set up the transfer and make legacy RNC 76 the Serving RNC.

Where a legacy UE 68 seeks to establish a communication through the eNode B 70, since this UE is not SAE compatible, it is necessary to transfer the UE from the eHSPA Node B, to the legacy network. This is performed by the RNC of the eNode B communicating with the legacy RNC over the Iur interface. In effect the eNode B will be completing an inter-RNC handover (i.e. from the RNC of the eNode B, to the legacy RNC 70). This transfer is also necessary where the eNode B has its ciphering turned off: for the legacy UE to be afforded security, it will need to be managed by a legacy RNC 76, where the security provisions are remote from the Node B 65.

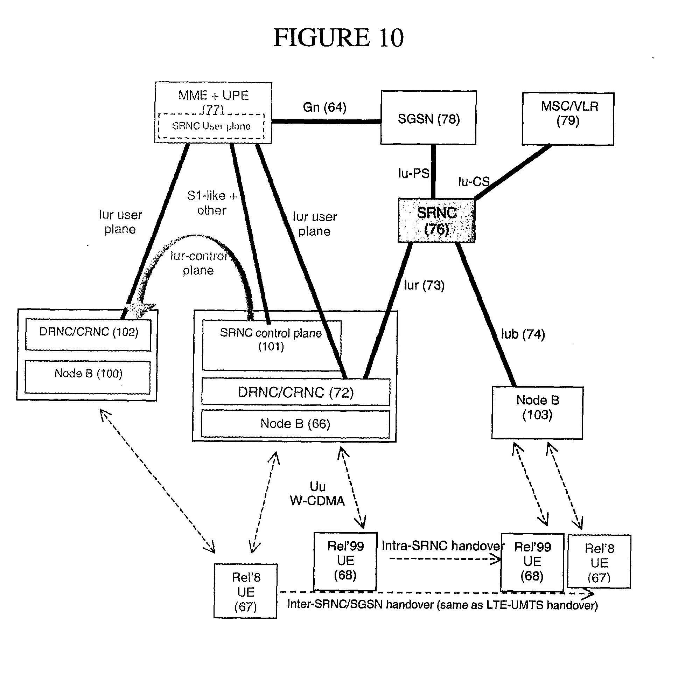

Figure 10 illustrates the same LTE/SAE architecture as Figure 7, with an evolved eHSPA Node B 70. In Figure 10, however, the user planes are illustrated where the network does need to support soft handover for the HSUPA radio access technology. In this regard, where a SAE compatible UE moves from eNode B 70 to eNode B 100, soft handover is managed by both the SRNC User plane within the MME/UPE 77 and the SRNC control plane 101 within eNode B 70. The UPE communicates with the RNCs of both eNode Bs 100, 70 using an Iur user plane. The RNCs of each eNode B 70, 100 also communicate with one another, this time using an Iur control plane. In this regard, since the control and user plane SRNC functionalities are physically separate in this arrangement, they need to communicate using a new interface, similar to the Iur interface of UTRAN.

It is to be appreciated that in this Figure 10 arrangement, the use of the UPE to do the macro-diversity combining (ie. Soft handover), means that something resembling an Iur user plane can be terminated between the UPE and the eNode Bs 100, 70 whilst still allowing the ciphering and header compression of the user plane data to be done by the ciphering and PDCP functions respectively residing in the UPE. At the same time given that RRC will terminate in the eHSPA Node B, then the ciphering and integrity protection for this function would need to be part of the eHSPA Node B.

It is to be appreciated that the embodiments of the invention just described are for illustrative purposes only and the exact procedures are not to be interpreted as limiting. For example, once the SRNS relocation procedure has been initiated, it is within the scope of the invention that other RANAP procedures, such as procedures initiated by the Core Network or the enhanced HSPA Node B itself, may require the SRNS relocation procedure to be terminated or delayed in order to allow the particular RANAP procedure to be undertaken.

Examples are given in the following paragraphs:
1. In a telecommunications network, including a base station node having a node controller component and a first radio network controller (RNC) component, the first radio network controller component configured to communicate with a packet switched component of a core network, but not with a circuit switched (CS) component, the telecommunications network further including a second RNC configured to communicate with the node controller and also to communicate with the packet switched component of the core network and the circuit switched component;
   a method of establishing a communication between a given user terminal and the core network via the second RNC, when a given user terminal has at least a control plane connection with the base station node, such that the first RNC is the serving RNC (SRNC), the method comprising:
   transmitting at least one message over the control plane between the node controller and the core network via the second RNC, such that the message is tunnelled between the node controller and the second RNC.
2. The method of paragraph 1, wherein the second RNC relays the at least one message, by placing the message in a control plane container for transmission over the control plane interface to the node controller, and/or removing the message from a control plane container for transmission over the control plane interface to the core network.
3. The method of paragraph 1, wherein the at least one message corresponds to a first protocol, and the message is tunnelled between the node controller and the second RNC in a control plane container corresponding to a second protocol.
4. The method of paragraph 3, wherein the first protocol is the Radio Access Network Application Protocol (RANAP) and the second protocol is the Node B Application Protocol (NBAP).
5. The method of any one preceding paragraph further including:
   tunnelling the at least one message in a control plane container between the node controller and the second RNC over the Iub interface; and
   upon receiving the control plane container, the second RNC removing the message therefrom and relaying the message on the control plane of the Iu interface to the core network.
6. The method of any one preceding paragraph further including:
   transmitting the at least one message from the core network to the second RNC over the Iu interface; and
   the second RNC receiving the message from the Iu interface and relaying the message in a control plane container over the Iub interface to the node controller.
7. The method of any one preceding paragraph wherein the at least one message is tunnelled over the control plane once the node controller determines that the given user terminal requires access to the circuit switched component of the core network.
8. The method of any one of paragraphs 1 to 6 wherein the at least one message is tunnelled over the control plane once the node controller determines that the given user terminal requires a type of call that cannot be setup directly from the base station node towards the packet switched component of the core network.
9. The method of paragraph 8 wherein the node controller determines that the given user terminal requires a packet switched connection using 3GPP Release 99 channels, where this is a type of connection that cannot be set up directly towards the packet switched core network from the base station node.
10. The method of paragraph 8 wherein the node controller determines that the given user terminal requires a circuit switched connection, which is a type of connection that cannot be set up directly from the base station node.
11. The method of any one of paragraphs 1 to 6 wherein the at least one message is tunnelled over the control plane once the first node controller determines that the given user terminal with which it is communicating is not HSPA-compatible.
12. The method of any one preceding paragraph further including the node controller transmitting a relocation message to the second RNC.
13. The method of paragraph 12 wherein the relocation message serves to trigger SRNS Relocation to the second RNC in the control plane.
14. The method of paragraph 12 or 13 wherein the relocation message serves to trigger SRNS Relocation to the second RNC in the user plane.
15. The method of paragraph 12, 13, or 14, where the relocation message contains the SRNS context of the user terminal.
16. The method of paragraph 12, wherein the transmission of the relocation message to the second RNC serves to inform the second RNC that it should consider itself the new serving RNC.
17. The method of paragraph 12 wherein the relocation message contains a radio bearer configuration to be used by the second RNC once it considers itself to be the serving RNC.
18. The method of paragraph 12 wherein the second RNC returns a message to the node controller to indicate that the actions requested in the received relocation message could not be carried out.
19. The method of paragraph 18 wherein the returned message from the second RNC tunnels an RRC message to be passed on to the user terminal from the node controller.
20. The method of paragraph 19 whereby the RRC message contains a radio bearer configuration to be used by the user terminal following the SRNS Relocation.
21. The method of paragraph 12 or paragraph 18 wherein the relocation message is transmitted using the NBAP protocol.
22. The method of any one preceding paragraph wherein the at least one message tunnelled includes a Radio Resource Control (RRC) "Initial Direct Transfer" message to the second RNC, which is terminated and read by the second RNC once it has become the new SRNS for the user connection.
23. The method of any one preceding paragraph wherein the at least one message tunnelled includes a Radio Access Bearer (RAB) Assignment Request message from the CS component of the Core Network to the node controller.
24. The method of paragraph 22 wherein the second RNC stores a copy of the RAB request message before tunnelling the message to the Node Controller;
   the node controller, upon receiving the RAB Assignment Request message, configuring the requested RAB resources and tunnelling the RAB assignment response message towards the second RNC, the node controller also initiating SRNS Relocation toward the second RNC;
   upon receiving the tunnelled RAB assignment response message, the second RNC buffering the message, while SRNS Relocation is effected; and
   the second RNC forwarding the RAB assignment response message towards the core network upon being established as the SRNC.
25. The method of any one of paragraphs 1 to 22, further including:
   the core network transmitting a RAB assignment request message towards the second RNC;
   the second RNC rejecting the RAB assignment request message and notifying the core network of such;
   the node controller initiating SRNS Relocation from the first RNC to the second RNC;
   when a timer expires in the Core network, and once SRNS relocation has been effected, the Core Network retransmitting a RAB assignment message towards the second RNC in order to initiate a RAB establishment.
26. The method of any one of paragraphs 1 to 14, further including:
   the Core Network transmitting a RAB assignment request message towards the second RNC;
   the second RNC tunnelling the received RAB assignment request message to the node controller;
   upon receiving the RAB assignment request message, the node controller establishing a radio bearer configuration and tunnelling a message to the core network, via the second RNC, notifying it of such;
   the node controller subsequently effecting SRNS Relocation from the first RNC to the second RNC.
27. The method of any one of paragraphs 1 to 22 further including:
   the core network transmitting a RAB assignment request message towards the second RNC;
   the second RNC, upon receiving the RAB assignment request message establishing a radio link configuration towards the base station node, and notifying the core network once the configuration has been established; and
   subsequently the node controller effecting SRNS Relocation from the first RNC to the second RNC.
28. The method of paragraph 26 or 27, wherein the core network takes steps to establish a connection between the given user terminal and a third party while SRNS Relocation is occurring.
29. The method of any one of paragraphs 1 to 15, further including:
   the node controller tunnelling a domain access request (RRC: INITIAL DIRECT TRANSFER message) message within an SRNS Relocation request message towards the second RNC;
   the second RNC buffering the received domain access request message;
   the second RNC effecting the SRNS Relocation;
   upon completion of the SRNS relocation, the second RNC acting on the domain access request message, continuing the CS connection setup towards the MSC via RANAP.
30. The method of paragraph 29, where the user terminal already has an existing packet switched connection, and the domain access request message is tunnelled through RANAP, via the PS Core network to the second RNC, within the Iu-PS SRNS Relocation messages.
31. The method of any one preceding paragraph, wherein the at least one message is a communication set up message.
32. In a telecommunications network, including a base station node having a node controller component and a first radio network controller (RNC) component, the first radio network controller configured to communicate with a packet switched component of a core network, but not with a circuit switched component, the telecommunications network further including a second RNC configured to communicate with the node controller and also to communicate with the packet switched component of the core network and the circuit switched component;
   a method of initiating SRNS relocation from the first RNC to the second RNC, when a given user terminal has at least a control plane connection with the base station node, such that the first RNC is the serving RNC (SRNC), the method comprising:
   transmitting an SRNS relocation message from the node controller to the second RNC across the Iub interface.
33. The method of paragraph 32 wherein the SRNS relocation message is intended to trigger SRNS relocation.
34. The method of paragraph 32 wherein the SRNS relocation message is intended to inform the second RNC that it should consider itself the serving RNC for the user connection.
35. The method of paragraph 32 wherein the SRNS relocation message contains a radio bearer configuration intended to be used by the second RNC when it considers itself to be the serving RNC.
36. The method of paragraph 32 wherein the second RNC returns a message to the node controller to indicate that the actions requested in the received SRNS relocation message could not be carried out.
37. The method of paragraph 36 wherein the returned message from the second RNC tunnels an RRC message to be passed on to the user terminal from the node controller.
38. The method of paragraph 37 whereby the RRC message contains a radio bearer configuration to be used by the user terminal following the SRNS relocation.
39. The method of paragraph 32, 36 or 37 further comprising transmitting the relocation message using the NBAP protocol.
40. The method of paragraph 32 or 39 further comprising the first protocol being Radio Resource Control (RRC) and the second protocol being NBAP, whereby the NBAP SRNS relocation message tunnels an RRC message.
41. The method of paragraph 32,39 or 40 whereby the relocation message contains a full SRNS context.
42. A telecommunications system configured to implement the method of any one preceding paragraph.
43. A base station node having a node controller component and a first radio network controller (RNC) component, the first radio network controller configured to communicate with a packet switched component of a core network using HSPA, but not with a circuit switched component, the node controller further configured to transmit at least one communication set up message over the control plane between the node controller and the core network via a second RNC, such that the at least one message relates to a first protocol and the base station node is configured to encapsulate the message in a control plane container according to a second protocol.
44. The base station node of paragraph 43, wherein the node controller is configured to transmit at least one RANAP message and encapsulate the message in an NBAP container for transmission across the Iub interface towards the core network via the second RNC.
45. In a telecommunications network, including a base station node having a node controller component and a first radio network controller (RNC) component, the first radio network controller component configured to communicate with a packet switched or IP component of a core network, but not with a circuit switched (CS) component, the telecommunications network further including a second RNC configured to communicate with the node controller and also to communicate with the packet switched component of the core network and the circuit switched component;
   a method of establishing a communication between a given user terminal and the core network via the second RNC, when a given user terminal has at least a control plane connection with the base station node, such that the first RNC is the serving RNC (SRNC), the method comprising:
   transmitting at least one message over the control plane between the first RNC component of the base station node and the second RNC, such that the message is transmitted over an Iur interface.
46. The method of paragraph 45 wherein the base station node is configured to communicate with a System Architecture Evolution (SAE) core network, such as a System Architecture Evolution (SAE) "evolved" packet-switched core network as defined in 3GPP.
47. The method of paragraph 45 or 46 wherein the second RNC is configured to communicate with a UMTS Core Network.
48. In a telecommunications network, including a base station node having a node controller component and a first radio network controller (RNC) component, the first radio network controller component configured to communicate with a packet switched or IP component of a core network, but not with a circuit switched (CS) component, the telecommunications network further including a network controller configured to communicate with the node controller and also to communicate with the packet switched component of the core network;
   a method of communicating with a given user terminal, the method comprising:
   the base station node communicating with the given user terminal in regard to one or more SRNC control plane functionalities; and
   the network controller communicating with the user terminal in relation to one or more SRNC user plane functionalities.
49. The method of paragraph 48 wherein the network controller communicates with the user terminal in relation to encryption and header compression in respect of user plane data.
50. The method of paragraph 48 or 49 wherein the base station node communicates with the user terminal in relation to encryption in respect of control plane data.
51. A telecommunications system configured to implement the method of any one of paragraphs 45 to 50.
52. A telecommunications network comprising a base station node having a node controller component and a first radio network controller (RNC) component, the first radio network controller component configured to communicate with a packet switched or IP component of a core network, but not with a circuit switched (CS) component, the telecommunications network further including a network controller configured to communicate with the node controller and also to communicate with the packet switched or IP component of the core network, the network characterised in that when the first RNC is operating as a Serving RNC, the first RNC is configured to perform SRNC control plane functionality, whilst the network controller is configured to perform user plane functionality.
53. The network of paragraph 52 wherein the network controller is a User Plane Entity (UPE).
54. The network of paragraph 52 or 53 wherein the network controller is configured to perform encryption and header compression in respect of user plane data.
55. The network of any one of paragraphs 52 to 55 wherein the first RNC is configured to perform user plane functionality in addition to the user plane functionality performed by the network controller.
56. A base station node having a node controller component and a first radio network controller (RNC) component, the first radio network controller configured to communicate with a packet switched or IP component of a core network using HSPA, but not with a circuit switched (CS) component, the node controller further configured to transmit at least one communication set up message over the control plane to a second RNC configured to communicate with the packet switched component of the core network and the circuit switched component, such that the at least one message is transmitted between the first RNC component of the base station node and the second RNC over an Iur interface.
57. The base station node of paragraph 56 wherein the base station node is configured to communicate with a System Architecture Evolution (SAE) core network, such as a System Architecture Evolution (SAE) "evolved" packet-switched core network, as defined in 3GPP.

## Claims

1. A method in a telecommunications network, the telecommunications network comprising a base station node having a node controller component and a first radio network controller (RNC) component, the first radio network controller component configured to communicate with a packet switched component of a core network, but not with a circuit switched (CS) component, the telecommunications network further comprising a second RNC configured to communicate with the node controller and also to communicate with the packet switched component of the core network and the circuit switched component; the method establishing communication between a given user terminal and the core network via the second RNC, when a given user terminal has at least a control plane connection with the base station node, such that the first RNC is the serving RNC (SRNC), the method comprising:
transmitting at least one message over the control plane between the node controller and the core network via the second RNC, such that the message is tunnelled between the node controller and the second RNC.

2. The method of claim 1 further including:
determining that the communication required by the given user terminal is not compatible with the base station node; and
consequently tunnelling the at least one message between the node controller and the second RNC, such that the at least one message is for the purpose of establishing the required communication.

3. The method of any one preceding claim, wherein the second RNC relays the at least one message, by:
placing the message in a control plane container for transmission over the control plane interface to the node controller, and/or
removing the message from a control plane container for transmission over the control plane interface to the core network.

4. The method of claim 1 or 2, wherein the at least one message corresponds to a first protocol, and the message is tunnelled between the node controller and the second RNC in a control plane container corresponding to a second protocol.

5. The method of any one preceding claim further including:
tunnelling the at least one message in a control plane container between the node controller and the second RNC over the Iub interface; and
upon receiving the control plane container, the second RNC removing the message therefrom and relaying the message on the control plane of the Iu interface to the core network.

6. The method of any one preceding claim further including:
transmitting the at least one message from the core network to the second RNC over the Iu interface; and
the second RNC receiving the message from the Iu interface and relaying the message in a control plane container over the Iub interface to the node controller.

7. The method of any one preceding claim wherein the at least one message corresponds to a RANAP protocol and the method further includes the node controller encapsulating the at least one RANAP message in an NBAP container for transmission across the Iub interface towards the core network via the second RNC.

8. The method of claim 2 wherein the determination that the communication required by the given user terminal is not compatible with the base station node comprises determining that:
the given user terminal requires access to the circuit switched component of the core network;
the given user terminal requires a type of call that cannot be setup directly from the base station node towards the packet switched component of the core network, such as a packet switched connection using 3GPP Release 99 channels; or
the given user terminal with which it is communicating is not HSPA-compatible.

9. The method of any one preceding claim further including the base station node transmitting a relocation message to the second RNC which serves to trigger SRNS Relocation to the second RNC in the control plane and/or the user plane.

10. The method of claim 9 where the relocation message is transmitted between the first RNC and the second RNC over the Iur interface.

11. The method of any one of claims 8 to 10 further including performing radio link configuration for the requested communication for before the SRNS relocation.

12. A base station node configured to establish communications between a given user terminal and the core network the base station node having a node controller component and a first radio network controller (RNC) component, the first radio network controller component configured to communicate with a packet switched component of a core network, but not with a circuit switched (CS) component, the base station node being configured to establish a communication between a given user terminal and the core network via a second RNC, when a given user terminal has at least a control plane connection with the base station node, such that:
the node controller component is configured to consequently transmit at least one message over the control plane to the core network via the second RNC, such that the message is tunnelled between the node controller and the second RNC.

13. The base station node of claim 12, wherein the at least one message that the node controller is configured to transmit comprises at least one RANAP message, which the node controller is configured to encapsulate in an NBAP container for transmission across the Iub interface towards the core network via the second RNC.

14. The base station node of claim 12 or 13 wherein the base station node is further configured to determine that the communication required by the given user terminal is not compatible with the base station node; and
the node controller being configured to consequently tunnel the at least one message towards the second RNC, such that the at least one message is for the purpose of establishing the required communication.

15. The base station node of claim 14 wherein, to determine that the user terminal is not compatible, the base station node is further configured to determine that:
the given user terminal requires access to the circuit switched component of the core network;
the given user terminal requires a type of call that cannot be setup directly from the base station node towards the packet switched component of the core network, such as a packet switched connection using 3GPP Release 99 channels;
or
the given user terminal with which it is communicating is not HSPA-compatible.

## Patentansprüche

1. Verfahren in einem Telekommunikationsnetz, wobei das Telekommunikationsnetz einen Basisstationsknoten mit einer Knotensteuerungskomponente und einer ersten RNC-(Radio Network Controller)-Komponente umfasst, wobei die erste RNC-Komponente zum Kommunizieren mit einer paketgeschalteten Komponente eines Kernnetzes, aber nicht mit einer leitungsgeschalteten (CS) Komponente konfiguriert ist, wobei das Telekommunikationsnetz ferner eine zweite RNC umfasst, die zum Kommunizieren mit der Knotensteuerung und auch zum Kommunizieren mit der paketgeschalteten Komponente des Kernnetzes und der leitungsgeschalteten Komponente konfiguriert ist;
wobei das Verfahren Kommunikationen zwischen einem gegebenen Benutzerterminal und dem Kernnetz über die zweite RNC einrichtet, wenn ein gegebenes Benutzerterminal wenigstens eine Steuerebenenverbindung mit dem Basisstationsknoten hat, so dass die erste RNC die bedienende RNC (SRNC) ist, wobei das Verfahren Folgendes beinhaltet:
Senden wenigstens einer Nachricht über die Steuerebene zwischen der Knotensteuerung und dem Kernnetz über die zweite RNC, so dass die Nachricht zwischen der Knotensteuerung und der zweiten RNC getunnelt wird.

2. Verfahren nach Anspruch 1, das ferner Folgendes beinhaltet:
Ermitteln, dass die von dem gegebenen Benutzerterminal benötigte Kommunikation nicht mit dem Basisstationsknoten kompatibel ist; und
demzufolge Tunneln der wenigstens einen Nachricht zwischen der Knotensteuerung und der zweiten RNC, so dass die wenigstens eine Nachricht dem Zweck des Einrichtens der benötigten Kommunikation dient.

3. Verfahren nach einem vorherigen Anspruch, wobei die zweite RNC die wenigstens eine Nachricht weiterleitet durch:
Platzieren der Nachricht in einem Steuerebenen-Container zur Übertragung über die Steuerebenenschnittstelle zur Knotensteuerung, und/oder
Entfernen der Nachricht aus dem Steuerebenen-Container zur Übertragung über die Steuerebenenschnittstelle zum Kernnetz.

4. Verfahren nach Anspruch 1 oder 2, wobei die wenigstens eine Nachricht einem ersten Protokoll entspricht und die Nachricht zwischen der Knotensteuerung und der zweiten RNC in einem Steuerebenen-Container entsprechend einem zweiten Protokoll getunnelt wird.

5. Verfahren nach einem vorherigen Anspruch, das ferner Folgendes beinhaltet:
Tunneln der wenigstens einen Nachricht in einem Steuerebenen-Container zwischen der Knotensteuerung und der zweiten RNC über die Iub-Schnittstelle; und
Entfernen durch die zweite RNC, nach dem Empfang des Steuerebenen-Containers, der Nachricht daraus und Weiterleiten der Nachricht auf der Steuerebene der Iu-Schnittstelle zum Kernnetz.

6. Verfahren nach einem vorherigen Anspruch, das ferner Folgendes beinhaltet:
Senden der wenigstens einen Nachricht vom Kernnetz zur zweiten RNC über die Iu-Schnittstelle; und
Empfangen der Nachricht, durch die zweite RNC, von der Iu-Schnittstelle und Weiterleiten der Nachricht in einem Steuerebenen-Container über die Iub-Schnittstelle zur Knotensteuerung.

7. Verfahren nach einem vorherigen Anspruch, wobei die wenigstens eine Nachricht einem RANAP-Protokoll entspricht und das Verfahren ferner beinhaltet, dass die Knotensteuerung die wenigstens eine RANAP-Nachricht in einem NBAP-Container zur Übertragung über die Iub-Schnittstelle zum Kernnetz über die zweite RNC verkapselt.

8. Verfahren nach Anspruch 2, wobei die Ermittlung, dass die von dem gegebenen Benutzerterminal benötigte Kombination nicht mit dem Basisstationsknoten kompatibel ist, die Ermittlung beinhaltet, dass:
das gegebene Benutzerterminal Zugang zur leitungsgeschalteten Komponente des Kernnetzes benötigt;
das gegebene Benutzerterminal einen Ruftyp benötigt, der nicht direkt vom Basisstationsknoten zur paketgeschalteten Komponente des Kernnetzes eingerichtet werden kann, wie zum Beispiel eine paketgeschaltete Verbindung mit 3GPP Release 99 Kanälen; oder
das gegebene Benutzerterminal, mit dem es kommuniziert, nicht HSPAkompatibel ist.

9. Verfahren nach einem vorherigen Anspruch, das ferner beinhaltet, dass der Basisstationsknoten eine Standortwechselnachricht zur zweiten RNC sendet, die zum Auslösen eines SRNS-Standortwechsels zur zweiten RNC in der Steuerebene und/oder der Benutzerebene dient.

10. Verfahren nach Anspruch 9, wobei die Standortwechselnachricht zwischen der ersten RNC und der zweiten RNC über die Iur-Schnittstelle gesendet wird.

11. Verfahren nach einem der Ansprüche 8 bis 10, das ferner das Durchführen von Funkverbindungskonfiguration für die angeforderte Kommunikation vor dem SRNS-Standortwechsel beinhaltet.

12. Basisstationsknoten, konfiguriert zum Einrichten von Kommunikationen zwischen einem gegebenen Benutzerterminal und dem Kernnetz, wobei der Basisstationsknoten eine Knotensteuerungskomponente und eine erste RNC-(Funknetzsteuerung)-Komponente hat, wobei die erste Funknetzsteuerkomponente zum Kommunizieren mit einer paketgeschalteten Komponente eines Kernnetzes, aber nicht mit einer leitungsgeschalteten (CS) Komponente konfiguriert ist, wobei der Basisstationsknoten zum Einrichten einer Kommunikation zwischen einem gegebenen Benutzerterminal und dem Kernnetz über eine zweite RNC konfiguriert ist, wenn ein gegebenes Benutzerterminal wenigstens eine Steuerebenenverbindung mit dem Basisstationsknoten hat, so dass:
die Knotensteuerungskomponente zum konsequenten Senden wenigstens einer Nachricht über die Steuerebene zum Kernnetz über die zweite RNC konfiguriert ist, so dass die Nachricht zwischen der Knotensteuerung und der zweiten RNC getunnelt wird.

13. Basisstationsknoten nach Anspruch 12, wobei die wenigstens eine Nachricht, dass die Knotensteuerung zum Senden konfiguriert ist, wenigstens eine RANAP-Nachricht umfasst, wobei die Knotensteuerung zum Verkapseln in einem NBAP-Container zur Übertragung über die Iub-Schnittstelle zum Kernnetz über die zweite RNC konfiguriert ist.

14. Basisstationsknoten nach Anspruch 12 oder 13, wobei der Basisstationsknoten ferner zum Ermitteln konfiguriert ist, dass die von dem gegebenen Benutzerterminal benötigte Kommunikation nicht mit dem Basisstationsknoten kompatibel ist; und
wobei die Knotensteuerung zum konsequenten Tunneln der wenigstens einen Nachricht zur zweiten RNC konfiguriert ist, so dass die wenigstens eine Nachricht dem Zweck des Einrichtens der benötigten Kommunikation dient.

15. Basisstationsknoten nach Anspruch 14, wobei zum Ermitteln, dass das Benutzerterminal nicht kompatibel ist, der Basisstationsknoten ferner konfiguriert ist zum Ermitteln, dass:
das gegebene Benutzerterminal Zugang zu der leitungsgeschalteten Komponente des Kernnetzes benötigt;
das gegebene Benutzerterminal einen Ruftyp benötigt, der nicht direkt vom Basisstationsknoten zur paketgeschalteten Komponente des Kernnetzes eingerichtet werden kann, wie zum Beispiel eine paketgeschaltete Verbindung unter Verwendung von 3GPP Release 99 Kanälen;
oder
das gegebene Benutzerterminal, mit dem es kommuniziert, nicht HSPAkompatibel ist.

## Revendications

1. Procédé dans un réseau de télécommunications, le réseau de télécommunications comprenant un noeud de station de base comportant un composant de contrôleur nodal et un premier composant de contrôleur de réseau radio (RNC), le premier composant de contrôleur de réseau radio étant configuré pour communiquer avec un composant commuté par paquets d'un réseau coeur, mais pas avec un composant commuté par circuits (CS), le réseau de télécommunications comprenant en outre un seconde contrôleur RNC configuré pour communiquer avec le contrôleur nodal et communiquer également avec le composant commuté par paquets du réseau coeur et le composant commuté par circuits ;
le procédé établissant une communication entre un terminal utilisateur donné et le réseau coeur par l'intermédiaire du second contrôleur RNC, quand un terminal utilisateur donné a au moins une connexion dans le plan de commande avec le noeud de station de base, de telle sorte que le premier contrôleur RNC soit le contrôleur RNC de desserte (SRNC), le procédé comprenant :
la transmission d'au moins un message sur le plan de commande entre le contrôleur nodal et le réseau coeur par l'intermédiaire du second contrôleur RNC, de telle sorte que le message soit transmis par tunnel entre le contrôleur nodal et le second contrôleur RNC.

2. Procédé selon la revendication 1 comportant en outre :
la détermination que la communication requise par le terminal utilisateur donné n'est pas compatible avec le noeud de station de base ; et
la transmission par tunnel subséquente de l'au moins un message entre le contrôleur nodal et le second contrôleur RNC, de telle sorte que l'au moins un message serve à établir la communication requise.

3. Procédé selon l'une quelconque des revendications précédentes, dans lequel le second contrôleur RNC relaie l'au moins un message, en :
plaçant le message dans un conteneur du plan de commande en vue de sa transmission sur l'interface du plan de commande avec le contrôleur nodal, et/ou
supprimant le message d'un conteneur du plan de commande en vue de sa transmission sur l'interface du plan de commande avec le réseau coeur.

4. Procédé selon la revendication 1 ou 2, dans lequel l'au moins un message correspond à un premier protocole, et le message est transmis par tunnel entre le contrôleur nodal et le second contrôleur RNC dans un conteneur du plan de commande correspondant à un second protocole.

5. Procédé selon l'une quelconque des revendications précédentes, comportant en outre :
la transmission par tunnel de l'au moins un message dans un conteneur du plan de commande entre le contrôleur nodal et le second contrôleur RNC sur l'interface Iub ; et
à la réception dans un conteneur du plan de commande, par le second contrôleur RNC la suppression du message du conteneur et le relais du message sur le plan de commande de l'interface Iu jusqu'au réseau coeur.

6. Procédé selon l'une quelconque des revendications précédentes comportant en outre:
la transmission de l'au moins un message du réseau coeur au second contrôleur RNC sur l'interface Iu ; et
par le second contrôleur RNC la réception du message depuis l'interface Iu et le relais du message dans un conteneur du plan de commande sur l'interface Iub avec le contrôleur nodal.

7. Procédé selon l'une quelconque des revendications précédentes, dans lequel l'au moins un message correspond à un protocole RANAP et le procédé comportant en outre l'encapsulation par le contrôleur nodal de l'au moins un message RANAP dans un conteneur NBAP en vue de sa transmission sur l'interface Iub vers le réseau coeur par l'intermédiaire du second contrôleur RNC.

8. Procédé selon la revendication 2, dans lequel la détermination que la communication requise par le terminal utilisateur donné n'est pas compatible avec le noeud de station de base comprend la détermination que :
le terminal utilisateur donné requiert l'accès au composant commuté par circuits du réseau coeur ;
le terminal utilisateur donné requiert un type d'appel qui ne peut pas être établi directement depuis le noeud de station de base vers le composant commuté par paquets du réseau coeur, telle qu'une connexion commutée par paquets utilisant les canaux 3GPP Release 99 ; ou
le terminal utilisateur donné avec lequel il communique n'est pas HSPA compatible.

9. Procédé selon l'une quelconque des revendications précédentes, comportant en outre la transmission par le noeud de station de base d'un message de transfert au second contrôleur RNC qui sert à déclencher un transfert de SRNS sur le second contrôleur RNC dans le plan de commande et/ou le plan utilisateur.

10. Procédé selon la revendication 9, dans lequel le message de transfert est transmis entre le premier contrôleur RNC et le second contrôleur RNC sur l'interface Iur.

11. Procédé selon l'une quelconque des revendications 8 à 10, comportant en outre l'exécution d'une configuration de liaison radio pour la communication requise avant le transfert du SRNS.

12. Noeud de station de base configuré pour établir des communications entre un terminal utilisateur donné et le réseau coeur, le noeud de station de base ayant un composant de contrôleur nodal et un premier composant de contrôleur de réseau radio (RNC), le premier composant de contrôleur de réseau radio étant configuré pour communiquer avec un composant commuté par paquets d'un réseau coeur, mais pas avec un composant commuté par circuits (CS), le noeud de station de base étant configuré pour établir une communication entre un terminal utilisateur donné et le réseau coeur par l'intermédiaire d'un second contrôleur RNC, quand un terminal utilisateur donné a au moins une connexion dans le plan de commande avec le noeud de station de base, de telle sorte que :
le composant de contrôleur nodal soit configuré pour transmettre subséquemment au moins un message sur le plan de commande au réseau coeur par l'intermédiaire du second contrôleur RNC, de telle sorte que le message soit transmis par tunnel entre le contrôleur nodal et le second contrôleur RNC.

13. Noeud de station de base selon la revendication 12, dans lequel l'au moins un message que transmet le contrôleur nodal configuré à cette fin comprend au moins un message RANAP, lequel contrôleur nodal étant configuré pour encapsuler ce message dans un conteneur NBAP en vue de sa transmission sur l'interface Iub vers le réseau coeur par l'intermédiaire du second contrôleur RNC.

14. Noeud de station de base selon la revendication 12 or 13, dans lequel le noeud de station de base est configuré en outre pour déterminer que la communication requise par le terminal utilisateur donné n'est pas compatible avec le noeud de station de base ; et
le contrôleur nodal étant configuré pour transmettre par tunnel subséquemment l'au moins un message vers le second contrôleur RNC, de telle sorte que l'au moins un message serve à établir la communication requise.

15. Noeud de station de base selon la revendication 14 dans lequel, pour déterminer que le terminal utilisateur n'est pas compatible, le noeud de station de base est configuré en outre pour déterminer que :
le terminal utilisateur donné requiert l'accès au composant commuté par circuits du réseau coeur ;
le terminal utilisateur donné requiert un type d'appel qui ne peut pas être établi directement depuis le noeud de station de base vers le composant commuté par paquets du réseau coeur, telle qu'une connexion commutée par paquets utilisant les canaux 3GPP Release 99 ;
ou
le terminal utilisateur donné avec lequel il communique n'est pas HSPA compatible.
